# EUROPEAN PATENT APPLICATION

(11) **EP 1 585 330 A2**
(43) Date of publication of application: **12.10.2005**
(21) Application number: 05252161.4
(22) Date of filing: 06.04.2005
(51) Int. Cl.: H04N 7/16, H04L 12/28

(54) **Network system, information processing apparatus, master apparatus, and apparatus information display method**

(30) Priority: 08.04.2004 JP 2004114268
(71) Applicant: SONY CORPORATION, Tokyo 141 (JP)
(72) Inventor: Ode, Naoki, c/o Sony Corporation, Tokyo 141 (JP)
(74) Representative: Mills, Julia

(57) **Abstract**

An information processing apparatus to allow a user to simply designate an operation target and intuitively operate the information processing apparatus is provided. The information processing apparatus according to an embodiment of the invention includes: a communication section communicating with one or more different information processing apparatuses, and receiving image and sound information including at least one of an image and a sound, apparatus information of different information processing apparatuses, and association information for associating the image and sound information with the apparatus information; a storage section storing the image and sound information, the apparatus information, and the association information received by the communication section; and a display section displaying contents of apparatus information of each information processing apparatus by using at least one of an image and a sound based on the information stored by the storage section.

## Description

The present invention contains subject matter related to Japanese Patent Application JP 2004-114268 filed in the Japanese Patent Office on April 8, 2004, the entire contents of which being incorporated herein by reference.

The present invention relates to the field of network systems, information processing apparatuses, an information processing apparatus included in such network systems, a master apparatus in a master/slave mode network system, and an apparatus information display method applied to such a network system.

In recent years, along with the popularization of networks, networked environments for information equipment, electrical household appliances and electrical equipment, and game devices (hereinafter referred to as information processing apparatus) have been promoted. A network system capable of easily performing coordinate operations, data sharing and the like through a network by using such various information processing apparatuses having various objects and functions has been proposed (for example, refer to Japanese Unexamined Patent Application Publication No. 2002-342165). According to the network system, all the information processing apparatuses have a micro processor based on a common computer architecture and an OS based on a new concept, which operates on the network (corresponding to a middleware in the traditional way of thinking). Therefore, the coordinate operations, the data sharing and the like can be easily performed through the network.

Many information processing apparatuses connectable to the network in the foregoing network system have a plurality of functions in one information processing apparatus, and can execute the plurality of functions in liaison with each other. Further, these information processing apparatuses can execute functions interrelated among the plurality of information processing apparatuses having related objects or functions in liaison with each other. However, in the current user interface such as a remote controller, a user determines which information processing apparatus the user is currently operating, by mechanical switching or a specified versatile name such as VTR1 and VTR2 in almost all cases. Therefore, when a user executes a plurality of functions of one information processing apparatus in liaison with each other, or executes functions interrelated among a plurality of information processing apparatuses in liaison with each other, comprehension of a correspondence relation between the versatile name as above and the actual information processing device becomes particularly difficult. Consequently, it may become very difficult for the user to understand which function of which information processing apparatus should be operated.

In view of the foregoing problem, it is desirable to provide a network system, an information processing apparatus, a master apparatus, and an apparatus information display method allowing users to easily designate an operation target and intuitively operate the information processing apparatus.

Various respective aspects of the present invention are set out in the appended claims.

According to an embodiment of the present invention, there is provided an information processing information, including: a communication section communicating with one or more different information processing apparatuses, and receiving image and sound information including at least one of an image and a sound, apparatus information of different information processing apparatuses, and association information for associating the image and sound information with the apparatus information; a storage section storing the image and sound information, the apparatus information, and the association information received by the communication section; and a display section displaying contents of apparatus information of each information processing apparatus by using at least one of an image and a sound based on the information stored by the storage section.

According to an embodiment of the present invention, there is provided a master apparatus, including: a reception section receiving image and sound information including at least one of an image and a sound, apparatus information of each slave apparatus, and association information for associating the image and sound information with the apparatus information from one slave apparatus; and a transmission section transmitting the image and sound information, the apparatus information, and the association information received by the reception section to different slave apparatuses.

According to an embodiment of the present invention, there is provided a network system including a master apparatus and a slave apparatus. The master apparatus includes: a reception section receiving image and sound information including at least one of an image and a sound, apparatus information of each slave apparatus, and association information for associating the image and sound information with the apparatus information from the slave apparatus; and a transmission section transmitting the image and sound information, the apparatus information, and the association information received by the reception section to different slave apparatuses. The slave apparatus includes: a communication section receiving the image and sound information, the apparatus information, and the association information from the master apparatus; a storage section storing the image and sound information, the apparatus information, and the association information received by the communication section; and a display section displaying contents of apparatus information of each information processing apparatus by using at least one of an image and a sound based on the information stored in the storage section.

According to an embodiment of the present invention, there is provided an apparatus information display method, wherein in any of information processing apparatuses, image and sound information including at least one of an image and a sound is input, and association information for associating the input image and sound information with apparatus information of each information processing apparatus is produced, wherein the image and sound information, the apparatus information, and the association information is shared by each information processing apparatus, and wherein in each information processing apparatus, contents of apparatus information of each information processing apparatus are displayed by using at least one of an image and a sound based on the association information.

In the information processing apparatus according to an embodiment of the present invention, image and sound information, apparatus information, and association information is received from different information processing apparatuses by the communication section, and is stored by the storage section. Then, based on the stored information, contents of apparatus information of each information processing apparatus are displayed by using at least one of an image and a sound by the display section.

Here, the image and sound information can be input by users, or previously incorporated in an information processing apparatus. "Apparatus information" is a concept widely including any information of a hardware, a software, utilization environments of the information processing apparatus. For example, the apparatus information includes information such as type, model, function, installation place, user, utilization situation of the information processing apparatus. "Apparatus information" is generally includes text information. However, the apparatus information can include information other than the text information (symbols, figures and the like), or can include a combination of text information and other information. "Apparatus information" may be the information itself, which is previously incorporated in the information processing apparatus, or may be information changed according to state change of the information processing apparatus. "Association information" means information for associating apparatus information with an image or a sound, which is formed in order to substitute the apparatus information to be displayed to information of an image or a sound easily recognized by users. Hereinafter, in this specification, these terms have similar meanings unless otherwise specified.

In the information processing apparatus according to an embodiment of the present invention, it is possible that configuration is made so that the information processing apparatus further includes: an input section inputting image and sound information; and an association section producing association information for associating apparatus information with the image and sound information input by the input section, and the storage section stores the association information produced by the association section together with the image and sound information input by the input section and the apparatus information, and the communication section transmits the association information produced by the association section together with the image and sound information input by the input section and the apparatus information to the different information processing apparatuses.

In the master apparatus according to an embodiment of the present invention, image and sound information, apparatus information, and association information is received from one slave apparatus by the reception section. Such information is transmitted to the different slave apparatuses by the transmission section. "Different slave apparatus" means slave apparatuses except for "one slave apparatus." However, if a plurality of " different slave apparatuses" exist, " different slave apparatus" does not necessarily means all thereof, but may mean some of them. Such reception information can be transmitted not only to " different slave apparatus," but also to "one slave apparatus" of the sender.

In the network system according to an embodiment of the present invention, image and sound information, apparatus information, and association information is received from the slave apparatus by the reception section of the master apparatus, and then such reception information is transmitted to the different slave apparatuses by the transmission section of the master apparatus. Meanwhile, in a slave apparatus, image and sound information, apparatus information, and association information is received from the master apparatus by the communication section, such information is stored by the storage section, and then contents of apparatus information of each information processing apparatus is displayed by using at least one of an image and a sound based on the information stored in the foregoing storage section by the display section.

In the apparatus information display method according to an embodiment of the present invention, in any of information processing apparatuses, image and sound information is input, and association information for associating the input image and sound information with apparatus information is produced. Such image and sound information, apparatus information, and association information is shared by each information processing apparatus. In each information processing apparatus, contents of apparatus information of each information processing apparatus are displayed by using at least one of an image and a sound based on the association information.

In the information processing apparatus according to an embodiment of the present invention, contents of apparatus information of each information processing apparatus are displayed with an image or a sound by using image and sound information, apparatus information, and association information received from different information processing apparatuses. Therefore, for example, on the assumption that the different information processing apparatus is operated from an operation screen of a certain information processing apparatus, users can simply designate an operation target, and can intuitively perform operations.

In particular, in the case that configuration is made so that the information processing apparatus further includes: an input section inputting image and sound information; and an association section producing association information for associating apparatus information with the image and sound information input by the input section, the association information produced by the association section is stored and transmitted to the different information processing apparatuses together with the image and sound information input by the input section and the apparatus information, it becomes available to display apparatus information in a manner using an image and a sound desired by users, that is, in the customized manner, and a more useful system can be built.

In the master apparatus according to an embodiment of the present invention, the master apparatus transmits image and sound information, apparatus information, and association information received from one slave apparatus to the different slave apparatuses. Therefore, such information can be shared by each slave apparatus. In the result, it becomes possible that configuration is made so that contents of apparatus information of each slave apparatus are displayed with an image or a sound by using such shared information in each slave apparatus. In this case, for example, on the assumption that the different information processing apparatus is operated from an operation screen of a certain information processing apparatus, users can simply designate an operation target, and can intuitively perform operations.

In the network system according to an embodiment of the present invention, the master apparatus transmits image and sound information, apparatus information, and association information received from one slave apparatus to the different slave apparatuses. Therefore, such information can be shared by each slave apparatus. In the slave apparatus, contents of apparatus information are displayed with an image or a sound by using the image and sound information, the apparatus information, and the association information received from the master apparatus. Therefore, for example, on the assumption that the different slave apparatus is operated from an operation screen of a certain slave apparatus, users can simply designate an operation target, and can intuitively perform operations.

In the apparatus information display method according to an embodiment of the present invention, image and sound information is input, association information for associating such input image and sound information with apparatus information is produced, such image and sound information, apparatus information, association information is shared by each information processing apparatus, and contents of apparatus information of each information processing apparatus are displayed by using at least one of an image and a sound based on the association information in each information processing apparatus. Therefore, for example, on the assumption that the different information processing apparatus is operated from an operation screen of a certain information processing apparatus, users can simply designate an operation target, and can intuitively perform operations.

Other and further objects, features and advantages of the invention will appear more fully from the following description.

The invention will now be described by way of example with reference to the accompanying drawings, throughout which like parts are referred to by like references, and in which:
Fig. 1 is an outline configuration view of a network system and an information processing apparatus;
Fig. 2 is an outline configuration view of a software cell;
Fig. 3 is an outline configuration view of a data area of the software cell;
Fig. 4 is an outline configuration view of the information processing apparatus;
Fig. 5 is an outline configuration view of peripheral equipment of an input device of the information processing apparatus;
Fig. 6 is an outline configuration view of a software that a main memory of an information processing controller stores;
Fig. 7 is a flow chart of operations of the network system;
Fig. 8 is a view showing one specific example of a registration screen displayed on the screen in customization;
Fig. 9 is a view showing one specific example of a registration screen displayed on the screen after customization;
Fig. 10 is a flow chart of operations of the network system;
Fig. 11 is a view showing one specific example of a screen for operating the information processing apparatus;
Fig. 12 is a view showing one specific example of a screen for operating the information processing apparatus;
Fig. 13 is a view showing one specific example of a screen for operating the information processing apparatus; and
Fig. 14 is an explanation drawing for explaining a condition for displaying contents of apparatus information in a manner which meet a specification of a display screen.

An embodiment of the invention will be hereinafter described in detail with reference to the drawings.

### (Basic configuration of the network system)

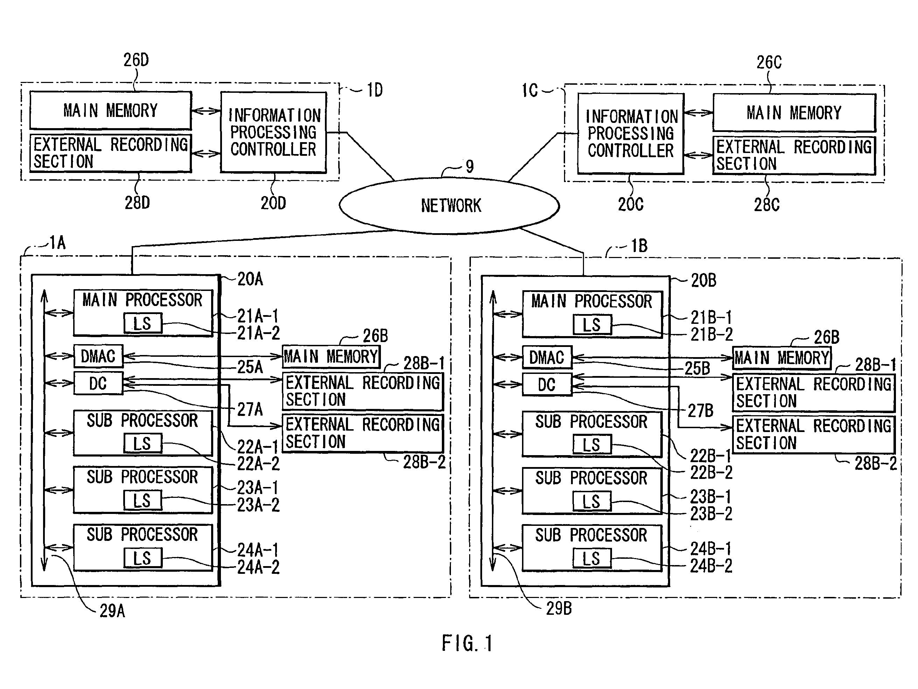

Fig. 1 shows a configuration example of a network system in an embodiment of the invention. The network system includes a network 9 and a plurality of information processing apparatuses 1A to 1D connected to the network 9. The network 9 is, for example, a LAN (local area network). The information processing apparatuses 1A to 1D correspond to, for example, information equipment such as a personal computer, electrical household appliances and electrical equipment, game devices and the like.

The information processing apparatus 1A includes an information processing controller 20A. The information processing controller 20A has a main processor 21A-1, sub processors 22A-1, 23A-1, and 24A-1, a direct memory access controller (DMAC) 25A, and a disk controller (DC) 27A.

The main processor 21A-1 performs schedule management of program execution (data processing) by the sub processor 22A-1 and the like, and general management of the information processing apparatus 1A. However, the main processor 21A-1 can perform other operations. In this case, the main processor 21A-1 functions as the sub processor 22A-1 and the like as well. Here, the main processor 21A-1 has a local storage (LS) 21A-2. It is possible that single sub processor 22A-1 and the like exists, but a plurality of sub processor 22A-1 and the like desirably exists. In this embodiment, a plurality of sub processor 22A-1 and the like exists.

The sub processor 22A-1 and the like execute programs and process data parallelly and independently of each other under the control of the main processor 21A-1. Further, a program in the main processor 21A-1 can operate in cooperation with a program in the sub processor 22A-1 and the like according to circumstances. The sub processor 22A-1 and the like also have local storages (LS) 22A-2, 23A-2, and 24A-2.

The DMAC 25A serves to access programs and data stored in a main memory 26A connected to the information processing controller 20A. Examples of the main memory 26A include a DRAM (Dynamic Random Access Memory). The disk controller (DC) 27A controls to allow the sub processor 22A-1 and the like to directly access external recording sections 28A-1 and 28A-2 connected to the information processing controller 20A. Here, Examples of the external recording sections 28A-1 and the like include a hard disk, optical disks such as an MO (Magneto Optical disk) and a DVD±RW (Digital Versatile Disk ReWritable), a memory disk, an SRAM (Static RAM), and an ROM (Read Only Memory). Therefore, though the DC 27A is referred to as a disk controller, the DC 27A is functionally an external recording section controller.

The information processing controller 20A can be configured so that a plurality of external recording section 28A-1 and the like is connected. The main processor 21A-1, the sub processor 22A-1 and the like, the DMAC 25A, and the DC 27A are connected through a bus 29A.

For the information processing controller 20A, an identifier capable of uniquely identifying the information processing apparatus 1A including the information processing controller 20A through the entire network 9 is allocated as an information processing apparatus ID. Similarly, for the main processor 21A-1, the sub processor 22A-1 and the like, an identifier capable of specifying each thereof is allocated as a main processor ID and a sub processor ID. It is desirable that the information processing controller 20A is configured as an one-chip IC (Integrated Circuit).

Other information processing apparatuses 1B, 1C, and 1D also have a configuration similar to the foregoing configuration. In the following descriptions, as a generic name, the information processing apparatuses 1A, 1B, 1C, and 1D will be simply referred to as an information processing apparatus 1 as appropriate. The same is applied to other components when referred to generically.

### (Configuration of a software cell 30)

In this network system, by transmitting a software cell 30 (described later in detail), which can be uniquely identified among the respective information processing apparatuses 1, each information processing apparatus 1 can grasp information that each information processing apparatus 1 has (for example, a hardware, a software, utilization environments and the like). Further, in this network system, coordinate operations and data sharing can be performed among the respective information processing apparatuses 1 based on such information.

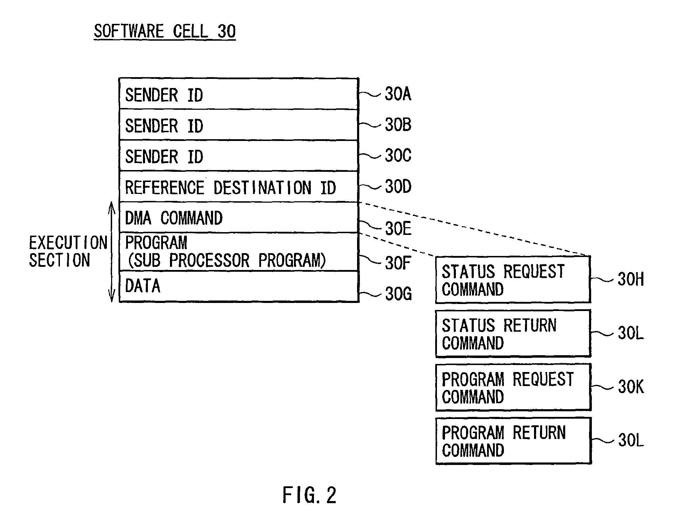

Fig. 2 shows a configuration example of the software cell 30 in this embodiment. In this network system, in order to perform coordinate operation and data sharing through the network 9 described as above, an object, the software cell 30 having a given format is used. The software cell 30 has a given format for storing identifiers for identifying each software cell 30 among the network 9 and a plurality of information processing apparatuses (a sender ID 30A, a transmission destination ID 30B, a response destination ID 30C, and a reference destination ID 30D), a DMA (Direct Memory Access) command 30E, a program 30F, and data 30G, respectively. The DMA command 30E includes a series of commands necessary for starting up a program and the like, specifically, a status request command 30H, a status return command 30J, a program request command 30K, a program return command 30L and the like.

The sender ID 30A has a network address of the information processing apparatus 1 of the sender of the software cell 30; and identifiers of the main processor 21-1 and the sub processor 22-1 (the main processor ID and the sub processor ID) included in the information processing controller 20 in that information processing apparatus 1. The transmission destination ID 30B has information similar to the above, such as a network address of the information processing apparatus 1 of the transmission destination of the software cell 30. The response destination ID 30C has information similar to the above, such as a network address of the information processing apparatus 1 of the response destination of execution results of the software cell 30. The reference destination ID 30D has a network address of the information processing apparatus 1 related to requested apparatus information.

The status request command 30H includes various types of commands. Specifically, a command for requesting transmission of apparatus information of the information processing apparatus 1 indicated by the reference destination ID 30D to the information processing apparatus 1 indicated by the response destination ID 30C (a first status request command 30H); and a command for requesting transmission of image and sound information, apparatus information, and association information of the information processing apparatus 1 indicated by the reference ID 30D to the information processing apparatus 1 indicated by the response destination ID 30C (a second status request command 30H) are included.

The status return command 30J also includes various types of commands. Specifically, a command that the information processing apparatus 1 receiving the foregoing first and second status request commands 30H responds information according to the request contents to the information processing apparatus 1 indicated by the response destination ID 30C (first and second status return commands 30J); a command for transmitting apparatus information of a self apparatus to the information processing apparatus 1 indicated by the response destination ID 30C (a third status return command 30J); a command for transmitting image and sound information, apparatus information, and association information of the information processing apparatus 1 indicated by the reference ID 30D to the information processing apparatus 1 indicated by the response destination ID 30C (a fourth status return command 30J) are included. The software cell 30, in which the DMA command 30E is the status return command 30J has information according to the request contents of the status request command 30H in a data area of the software cell 30.

The program request command 30K is a command for requesting the different information processing apparatus 1 to transmit a program. The program return command 30L is a command, when the program request command 30K is received from the different information processing apparatus 1, for transmitting the requested program to the information processing apparatus 1 of the sender.

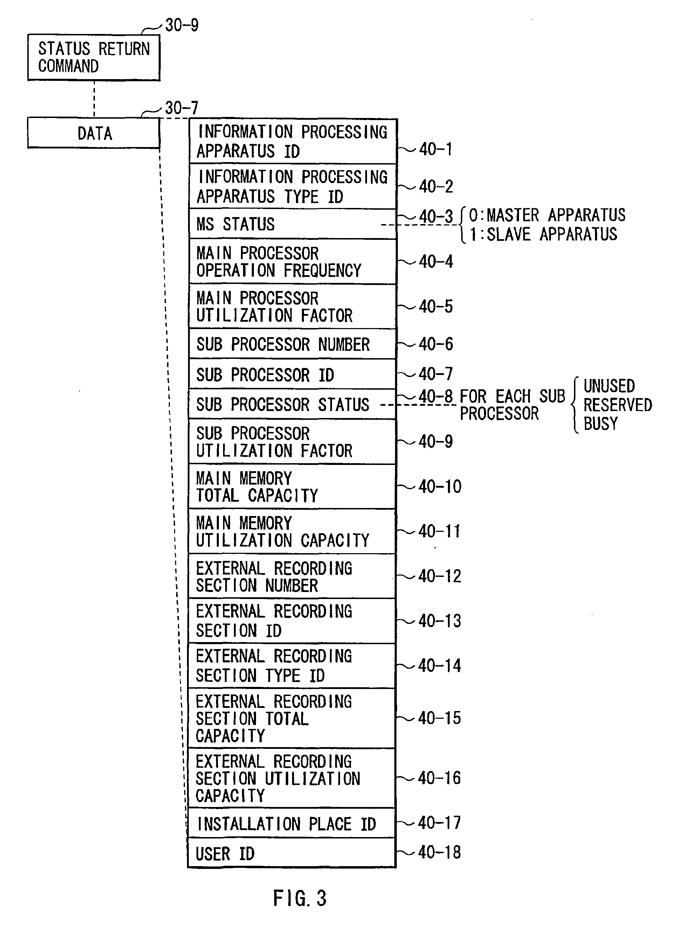

Fig. 3 shows a structure of a data area of the software cell 30 in the case that the DMA command 30E is the status return command 30J. An information processing apparatus ID 40-1 represents an information processing apparatus ID of a transmission destination of the status return command 30J. When the power is turned on, the information processing apparatus ID 40-1 is produced by a main processor 21-1 included in an information processing controller 20 in the information processing apparatus 1, based on the date and hour when the power is turned on, a network address of the information processing apparatus 1, and the number of sub processor 22-1 and the like included in the information processing controller 20 in the information processing apparatus 1.

An information processing apparatus type ID 40-2 has a value representing characteristics of the individual information processing apparatus 1. Examples of the characteristics of the information processing apparatus 1 include, for example, a hard disk recorder, a PDA (Personal Digital Assistant), and PS3 (Playstation 3: registered trademark). The information processing apparatus type ID represents a function of the information processing apparatus 1, such as image and sound recording, and image and sound reproduction. The value representing characteristics of the information processing apparatus 1 shall be previously determined. Each information processing apparatus 1 can grasp characteristics of each information processing apparatus 1 by reading out the information processing apparatus type ID 40-2.

An MS (Master/Slave) status 40-3 shows whether the individual information processing apparatus 1 operates as the master apparatus or a slave apparatus. When the MS (Master/Slave) status 40-3 is set to 0, the information processing apparatus 1 operates as the master apparatus. Meanwhile, when the MS (Master/Slave) status 40-3 is set to 1, the information processing apparatus 1 operates as a slave apparatus. The master apparatus is an information processing apparatus for managing slave apparatuses, and represents an information processing apparatus corresponding to a base unit for the slave apparatuses. A slave apparatus is an information processing apparatus managed by the master apparatus, and represents an information processing apparatus corresponding to a child unit of the master apparatus.

A main processor operation frequency 40-4 represents an operation frequency of the main processor 21-1 in the information processing controller 20. A main processor utilization factor 40-5 represents a utilization factor in the main processor 21-1 regarding all the programs currently operating in the main processor 21-1. The main processor utilization factor 40-5 is a value representing a ratio of a processing capacity in use to the entire processing capacity of the target main processor 21-1. For example, the main processor utilization factor 40-5 is calculated in units of MIPS, the unit for evaluating processor processing capacities, or calculated based on processor utilization time per unit time. The same is applied to an after-mentioned sub processor utilization factor.

A sub processor number 40-6 represents the number of sub processor 22-1 and the like included in the information processing controller. A sub processor ID 40-7 is an identifier for identifying the sub processor 22A-1 and the like in the information processing controller.

A sub processor status 40-8 shows a state of the sub processor 22-1 and the like. The states thereof include unused, reserved, busy and the like. The unused means that the sub processor 22-1 and the like are not currently used, or not reserved for utilization. The reserved means a state that the sub processor 22-1 and the like are not currently used, but are reserved. The busy means that the sub processor 22-1 and the like are currently used.

A sub processor utilization factor 40-9 represents a utilization factor in the sub processor 22-1 and the like regarding programs currently executed in the sub processor 22-1 and the like, or programs reserved to be executed in the sub processor 22-1 and the like. That is, the sub processor utilization factor 40-9 represents a current utilization factor when the sub processor status 40-8 is busy, and represents prospective estimated utilization factor for subsequent utilization when the sub processor status 40-8 is reserved.

One set of the sub processor ID 40-7, the sub processor status 40-8, and the sub processor utilization factor 40-9 is set respectively for each sub processor 22-1 and the like. A number of sets corresponding to the number of the sub processor 22-1 and the like in one information processing controller 20 are set.

A main memory total capacity 40-10 and a main memory utilization capacity 40-11 represent the total capacity and a currently used capacity of a main memory 26 connected to the information processing controller 20, respectively.

An external recording section number 40-12 represents the number of an external recording section 28-1 and the like connected to the information processing controller 20. An external recording section ID 40-13 is information for uniquely identifying the external recording section 28-1 and the like connected to the information processing controller 20. An external recording section type ID 40-14 represents a type of the external recording section 28-1 and the like (for example, hard disk, CD±RW, DVD±RW, memory disk, SRAM, ROM and the like).

An external recording section total capacity 40-15 and an external recording section utilization capacity ID 40-16 represent the total capacity and a currently used capacity of the external recording section 28-1 and the like identified by the external recording section ID 40-13, respectively.

A set of the external recording section ID 40-13, the external recording section type ID 40-14, the external recording section total capacity 40-15, and the external recording section utilization capacity 40-16 is set for each external recording section 28-1 and the like. A number of sets corresponding to the number of the external recording section 28-1 and the like connected to the information processing controller 20 are set. That is, when a plurality of external recording section 28-1 and the like is connected to one information processing controller 20, the external recording section ID 40-13 different from each other is allocated to each external recording section 28-1 and the like, and the external recording section type ID 40-14, the external recording section total capacity 40-15, and the external recording section utilization capacity 40-16 are separately managed as well.

An installation place ID 40-17 represents a place where the individual information processing apparatus 1 is installed. A user ID 40-18 represents a person using the individual information processing apparatus 1.

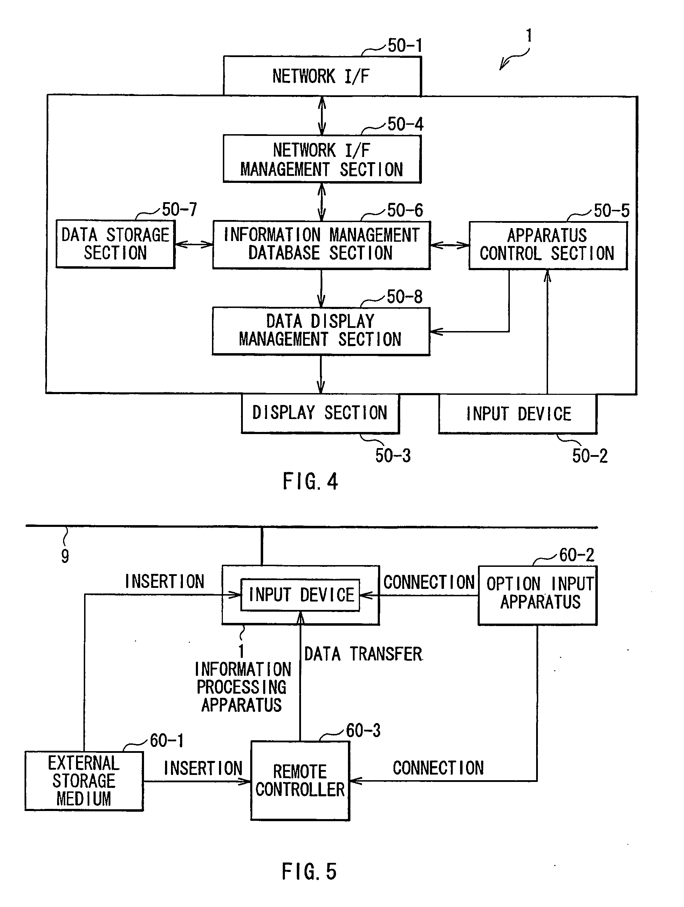

Figs. 4 and 5 show configuration examples of the information processing apparatus 1 in this embodiment. The information processing apparatus 1 includes: a network interface 50-1; an input device 50-2 for downloading information such as text, images and sounds from users; and a display section providing information to users (or an interface for a display apparatus connectable to an external display apparatus) 50-3. As shown in Fig. 5, it is possible that the input device 50-2 downloads information from an external storage medium 60-1, an option input apparatus 60-2, or a remote controller 60-3. Further, the information processing apparatus includes: a network interface management section 50-4 for performing input/output management of information from the network 9; an apparatus control section 50-5 for controlling input operation from users, the external storage medium, the option input apparatus, and the remote controller; an information management database section 50-6 for managing information downloaded from outside; a data storage section 50-7 for storing information; and a data display management section 50-8 for displaying stored information or an operation situation.

The input device 50-2 corresponds to one specific example of an input section. The information management database section 50-6 corresponds to one specific example of an association section. The data storage section 50-7 corresponds to one specific example of a storage section. The data display management section 50-8 and the display section 50-3 correspond to one specific example of a display section. The network interface 50-1 and the network interface management section 50-4 correspond to one specific example of a communication section. Further, the network interface 50-1 and the network interface management section 50-4 correspond to one specific example of a transmission section and a reception section in addition to the communication section.

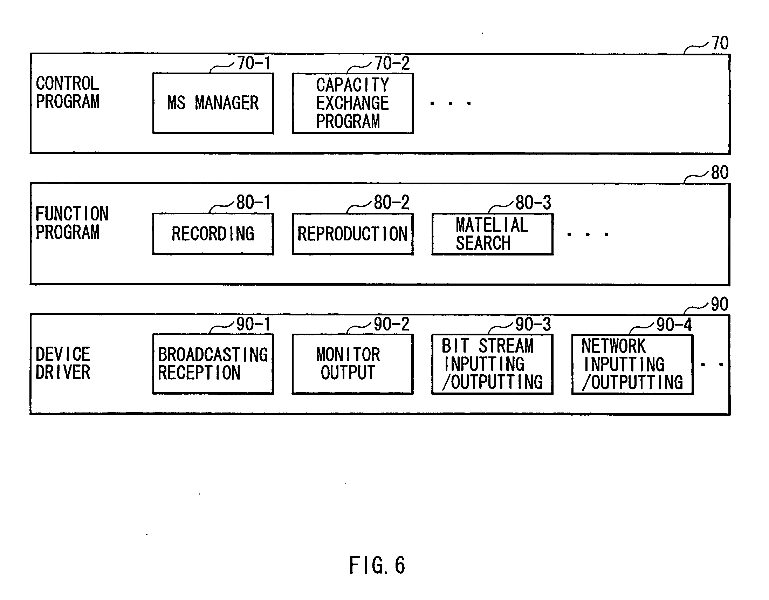

Fig. 6 shows configuration of softwares stored in the main memory 26 of the individual information processing controller 20. Before the power of the information processing apparatus 1 is turned on, these softwares are recorded in the external recording section 28-1 and the like connected to the information processing controller 20. Each software is categorized as a control program 70, a function program 80, or a device driver 90 according to respective functions or characteristics. The control program 70 is executed by the main processor 20-1 of each information processing controller 20, and has an after-mentioned MS (Master/Slave) manager 70-1 and an after-mentioned capacity exchange program 70-2. The function program 80 is executed by the main processor 21-1, and has a recording program 80-1, a reproduction program 80-2, a material search program 80-3 and the like, which correspond to functions of the information processing apparatus 1. The device driver 90 is used for inputting/outputting of the information processing apparatus 1, and has a broadcasting reception 90-1, a monitor outputting 90-2, a bit stream inputting/outputting 90-3, a network 9 inputting/outputting 90-4 and the like, which correspond to devices of the information processing apparatus 1.

Next, descriptions will be given of operations of the network system configured as above.

### (Initial operation)

First, descriptions will be given of an initial operation when the information processing apparatus 1 is newly connected to the network 9. Descriptions will be sequentially given in order of (A) determination of the master and the slave in the network system, (B) giving and receiving apparatus information between the master apparatus and a slave apparatus, and (C) when the information processing apparatus 1 is disconnected from the network 9. Here, "connected" means not only that the information processing apparatus 1 is physically connected to the network 9, but also that the information processing apparatus 1 is electrically and functionally connected to the network 9. In order to simplify the descriptions, the self information processing apparatus 1 is hereinafter referred to as a self apparatus, and other information processing apparatus 1 is hereinafter referred to as a different apparatus. Further, the information processing apparatus 1 newly connected to the network 9 is hereinafter referred to as a new apparatus.

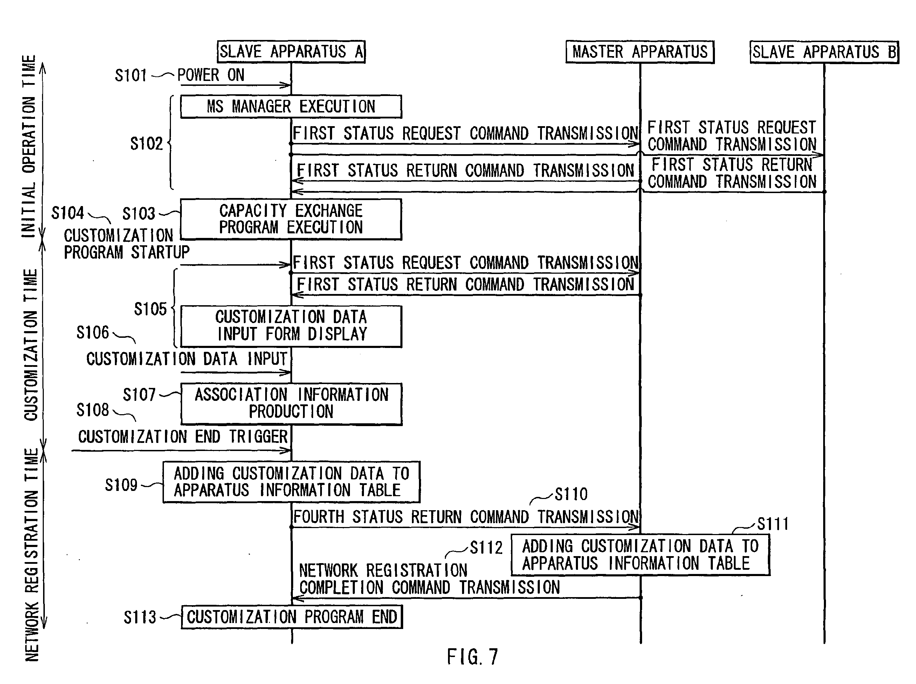

Fig. 7 shows an outline of respective operations in the foregoing initial operation, an after-mentioned customization, and an after-mentioned network registration. The respective operations will be hereinafter described with reference to Fig. 7. Here, the customization means that apparatus information displayed on the screen is substituted with an image or a sound easily recognized by users. The network registration means allowing each information processing apparatus 1 connected to the network 9 to share image and sound information, apparatus information, and association information related to the customization. The apparatus information includes at least one of the information including a type (apparatus name) 101, a model 102, a function 103, an installation place 104, a user 105, and a utilization situation (including a function reservation 106) and the like of the information processing apparatus 1. The type (apparatus name) 101 represents a type of equipment such as a hard disk recorder, a PDA (Personal Digital Assistant), and PS3 (Playstation 3: registered trademark). The model 102 represents an identification symbol suggesting a specification of the information processing apparatus 1 such as WEGA-32INCH (WEGA: registered trademark). The function 103 means a function executable in the information processing apparatus 1. The installment place 104 represents a place where the information processing apparatus 1 is installed. The user 105 represents a person who uses the information processing apparatus 1. The utilization situation represents a utilization situation and a reservation situation of hardwares and softwares of the information processing apparatus 1.

### (Determination of the master and the slave in the network system)

In a new apparatus, when the main power is turned on (Step S101), the main processor 21-1 of the information processing controller 20 of the new apparatus loads a master/slave manager (hereinafter referred to as MS manager) into the main memory 26 and executes the MS manager (Step S102).

First, the MS manager 70-1 produces the software cell 30, in which the DMA command 30E is the first status request command 30H; the sender ID 30A and the response destination ID 30C are the new apparatus; and the transmission destination ID 30B and the reference destination ID 30D are an unspecified information processing apparatus, and transmits the software cell 30 onto the network 9. Then, a timer for network connection confirmation is set. A timeout time of the timer is, for example, 10 minutes.

When a different apparatus is connected to the network 9, the different apparatus receives the software cell 30 of the first status request command 30H. The different apparatus receiving the software cell 30 transmits the software cell 30, in which the DMA command 30E is the first status return command 30J and self apparatus information is included as data to the new apparatus indicated by the response destination ID 30C.

The MS manager 70-1 of the new apparatus monitors reception of the software cell 30 transmitted from the different apparatus on the network 9 until the timer for network connection confirmation time outs. Then, when the first status return command 30J showing MS status=0 (master apparatus) is received, MS status in an apparatus information table of the new apparatus is set to 1. Thereby, the new apparatus becomes a slave apparatus.

Meanwhile, when the MS manager 70-1 of the new apparatus receives no first status return command 30J until the timer for network connection confirmation time outs, MS status in the apparatus information table of the new apparatus is set to 0. Thereby, the new apparatus becomes the master apparatus. That is, in the state that no apparatus is connected to the network 9, when a new apparatus is connected to the network 9, the new apparatus is automatically set as the master apparatus. Meanwhile, in the state that the master apparatus already exists on the network 9, when a new apparatus is connected to the network 9, the new apparatus is automatically set as a slave apparatus.

### (Giving and receiving apparatus information between the master apparatus and a slave apparatus)

After the respective information processing apparatuses 1 are set as the master apparatus or a slave apparatus, the MS manager 70-1 of the master apparatus and the slave apparatus always checks the situation of the network 9. Then, the MS manager 70-1 notifies that the following information is received to the main processor 21-1: (a) when notification that apparatus information of a self apparatus is changed is received from the self apparatus (for example, when a recording function of the self apparatus is reserved in the self apparatus); (b) when enquiry on apparatus information of at least one of a self apparatus and a different apparatus is received from the self apparatus (for example, when apparatus information of at least one of the self apparatus and the different apparatus is tried to be displayed on the screen in the self apparatus); (c) when the first status request command 30H is received from a different apparatus (for example, when apparatus information of a self apparatus is tried to be displayed on the screen in the different apparatus); or (d) when the third status return command 30J is received from a different apparatus (for example, when a recording function of at least one of a self apparatus and the different apparatus is reserved in the different apparatus). When the main processor 21-1 receives the foregoing notification from the MS manager 70-1, the main processor 21-1 executes the capacity exchange program 70-2 (Step S103). Descriptions will be hereinafter given of the respective cases.

In the case that a self apparatus is the master apparatus, (a) when notification that apparatus information of the self apparatus is changed is received from the self apparatus, the capacity exchange program 70-2 transmits the self apparatus information to other slave apparatus connected to the network 9.

Here, when a plurality of " different slave apparatuses" exist, the different slave apparatus does not necessarily indicate all the plurality of different slave apparatuses, but may indicate some of them. Transmitting the self apparatus information can be performed by transmitting the software cell 30, in which the DMA command 30E is the third status return command 30J and the apparatus information of the self apparatus (master apparatus) is included as data to different slave apparatus.

In the case that a self apparatus is the master apparatus, (b) when a reference request of apparatus information of at least one of the self apparatus (master apparatus) and a different apparatus (slave apparatus) is received from the self apparatus, the capacity exchange program 70-2 obtains the apparatus information of the information processing apparatus 1 of the reference destination.

Here, when the reference destination is a different apparatus (slave apparatus), the master apparatus can obtain the apparatus information of the different apparatus from a given memory of the self apparatus (master apparatus), or can obtain the apparatus information of the different apparatus from the different apparatus (slave apparatus) of the reference destination. Meanwhile, when the reference destination is the self apparatus (master apparatus), the master apparatus can obtain the apparatus information of the self apparatus from a given memory of the self apparatus (master apparatus), or can obtain the apparatus information of the self apparatus by detecting a self status. When the reference destination is a different apparatus (slave apparatus), obtaining apparatus information from the different apparatus (slave apparatus) of the reference destination by the master apparatus can be performed by producing the software cell 30, in which the DMA command 30E is the first status request command 30H in the capacity exchange program 70-2 of the master apparatus; transmitting the software cell 30 to the slave apparatus, the reference destination; and then receiving the software cell 30, in which the DMA command 30E is the first status return command 30J and the apparatus information of the slave apparatus of the reference destination is included as data from the slave apparatus of the reference destination.

In the case that a self apparatus is the master apparatus, (c) when a notification that the first status request command 30H is received from a different apparatus (slave apparatus) is received, the capacity exchange program 70-2 obtains apparatus information of the information processing apparatus 1 indicated by the reference destination ID 30D, and transmits such apparatus information to the information processing apparatus 1 indicated by the response destination ID 30C.

Here, when the reference destination is a different apparatus (slave apparatus), the master apparatus can obtain the apparatus information of the different apparatus from a given memory of the self apparatus (master apparatus), or can obtain the apparatus information of the different apparatus from the different apparatus (slave apparatus) of the reference destination. Meanwhile, when the reference destination is the self apparatus (master apparatus), the master apparatus can obtain the apparatus information of the self apparatus from a given memory of the self apparatus (master apparatus), or can obtain the apparatus information of the self apparatus by detecting a self status. The information processing apparatus 1 (slave apparatus), the response destination is not limited to all of the different slave apparatuses, but can be part thereof. When the reference destination is a slave apparatus, obtaining apparatus information from the slave apparatus by the master apparatus can be performed by the method similar to the foregoing.

In the case that a self apparatus is the master apparatus, (d) when a notification that the third status return command 30J is received from a different apparatus (slave apparatus) is received, the capacity exchange program 70-2 obtains apparatus information of the slave apparatus indicated by the information processing apparatus ID in the data area of the received software cell 30, and transmits such apparatus information to a different apparatus (slave apparatus).

Here, the different apparatus (slave apparatus) of the transmission destination is not limited to all of the different slave apparatuses, but can be part thereof. Further, the different apparatus (slave apparatus) of the transmission destination can include the different apparatus (slave apparatus) of the sender. Transmitting the foregoing apparatus information from the master apparatus to the different apparatus (slave apparatus) can be performed by transmitting the software cell 30, in which the DMA command 30E is the third status return command 30J, and previously received apparatus information is included as data to the different apparatus (slave apparatus).

Meanwhile, in the case that a self apparatus is a slave apparatus, (a) when notification that apparatus information of the self apparatus is changed is received from the self apparatus, the capacity exchange program 70-2 transmits the self apparatus information to the master apparatus connected to the network 9. Transmitting the self apparatus information can be performed by transmitting the software cell 30, in which the DMA command 30E is the third status return command 30J and the apparatus information of the self apparatus (slave apparatus) is included as data to the master apparatus.

In the case that a self apparatus is a slave apparatus, (b) when a reference request of apparatus information of at least one of the self apparatus and a different apparatus is received from the self apparatus, the capacity exchange program 70-2 obtains the apparatus information of the information processing apparatus 1 of the reference destination.

Here, when the reference destination is a different apparatus (at least one of the different slave apparatuses and the master apparatus), the self apparatus (slave apparatus) obtains the apparatus information of the different apparatus from the master apparatus. Meanwhile, when the reference destination is the self apparatus (slave apparatus), the self apparatus (slave apparatus) can obtain the apparatus information of the self apparatus from a given memory of the self apparatus (slave apparatus), or can obtain the apparatus information of the self apparatus by detecting a self status. When the reference destination is a different apparatus (at least one of the different slave apparatuses and the master apparatus), obtaining the apparatus information from the master apparatus by the self apparatus (slave apparatus) can be performed by producing the software cell 30, in which the DMA command 30E is the first status request command 30H in the capacity exchange program 70-2 of the self apparatus (slave apparatus); transmitting the software cell 30 to the master apparatus; and then receiving the software cell 30, in which the DMA command 30E is the first status return command 30J and the apparatus information of the different apparatus of the reference destination (at least one of the different slave apparatuses and the master apparatus) is included as data from the master apparatus.

In the case that a self apparatus is a slave apparatus, (c) when a notification that the first status request command 30H is received from a different apparatus is received, the capacity exchange program 70-2 obtains apparatus information of the self apparatus (slave apparatus), and transmits such apparatus information to the information processing apparatus 1 indicated by the response destination ID 30C.

Here, the different apparatus of the sender and the information processing apparatus 1 of the response destination are the master apparatus or the different slave apparatus. The self apparatus (slave apparatus) can obtain the self apparatus information by detecting a self status or can obtain the self apparatus information from a given memory of the self apparatus.

In the case that a self apparatus is a slave apparatus, (d) when a notification that the third status return command 30J is received from a different apparatus is received, the capacity exchange program 70-2 obtains apparatus information of the information processing apparatus 1 indicated by the information processing apparatus ID in the data area of the received software cell 30, and records such apparatus information in a given self memory. Here, the different apparatus is the master apparatus or the different slave apparatus. Further, here, the information processing apparatus 1 indicated by the information processing apparatus ID is at least one of the master apparatus and the different slave apparatus. The information processing apparatus 1 indicated by the information processing apparatus ID can include the self apparatus (slave apparatus).

In any of the master apparatus and a slave apparatus, the capacity exchange program 70-2 secures an area for storing apparatus information of all the information processing apparatuses 1 including the self apparatus connected to the network 9 in the main memory 26 of the self apparatus, and stores such information as an apparatus information table.

Further, in any of the master apparatus and a slave apparatus, when apparatus information is received from a different apparatus as above, the capacity exchange program 70-2 stores the apparatus information in the self main memory 26. Similarly, when a notification that apparatus information of a self apparatus is changed is received as described above, the capacity exchange program 70-2 registers the apparatus information in a given area of the self main memory 26.

The MS manager 70-1 and the capacity exchange program 70-2 are not limited to be executed by the main processor 21-1, but can be executed by any of the sub processor 22-1 and the like. Further, the MS manager 70-1 and the capacity exchange program 70-2 are desirably a resident program, which normally operates while the main power of the information processing apparatus 1 is turned on.

### (When the information processing apparatus 1 is disconnected from the network 9)

In any of the master apparatus and a slave apparatus, the MS manager 70-1 monitors a situation of a different apparatus by regularly transmitting the first status request command 30H to the different apparatus on the network 9, and enquiring apparatus information. Then, when the first status return command 30J is not returned from a specific different apparatus within a given term previously set for determination, since the main power of the information processing apparatus 1 connected to the network 9 is turned off, or since the information processing apparatus 1 is disconnected from the network 9, such information is notified to the after-mentioned capacity exchange program 70-2.

In any of the master apparatus and a slave apparatus, when notification that the main power of the information processing apparatus 1 connected to the network 9 is turned off, or the information processing apparatus 1 is disconnected from the network 9 is received from the MS manager 70-1 as described above, the capacity exchange program 70-2 deletes an apparatus information table of such information processing apparatus 1 from the main memory of the self apparatus.

Further, when the information processing apparatus 1 disconnected from the network 9 as above is the master apparatus, another master apparatus is determined newly by the following method.

Specifically, for example, respective slave apparatuses not disconnected from the network 9 replace information processing apparatus IDs of the self apparatus and different apparatuses into numerical values, and compare the information processing apparatus ID of the self apparatus with the information processing apparatus IDs of the different apparatuses. If the information processing apparatus ID of the self apparatus is the lowest value among the information processing apparatus IDs of the slave apparatuses not disconnected from the network 9, the slave apparatus changes to the master apparatus by setting the MS status to 0. As described above, the information processing apparatus 1, which newly becomes the master apparatus obtains apparatus information of all of the different apparatuses (respective slave apparatuses) connected to the network 9, and records the apparatus information in the main memory.

The above is all the descriptions of the initial operation when the information processing apparatus 1 is newly connected to the network 9. Next, descriptions will be given of operations for customization.

### (Operations for customization)

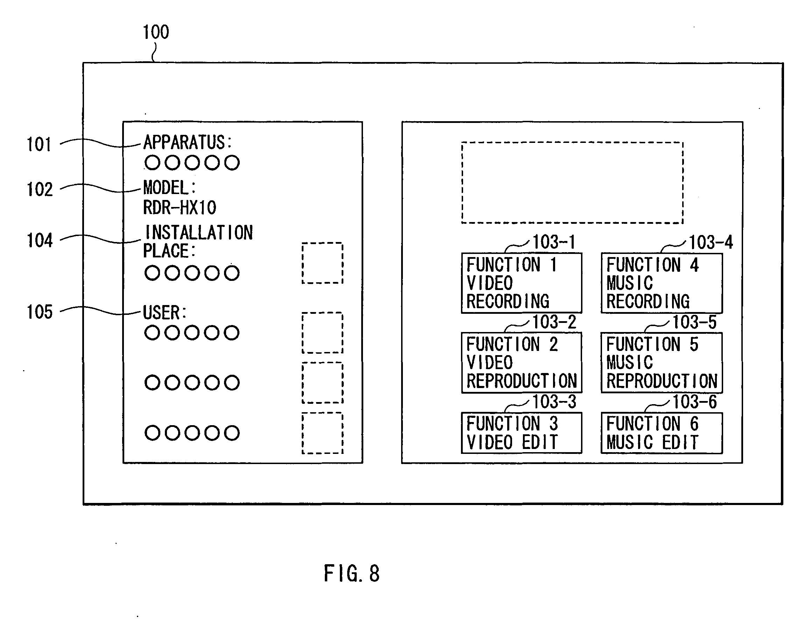

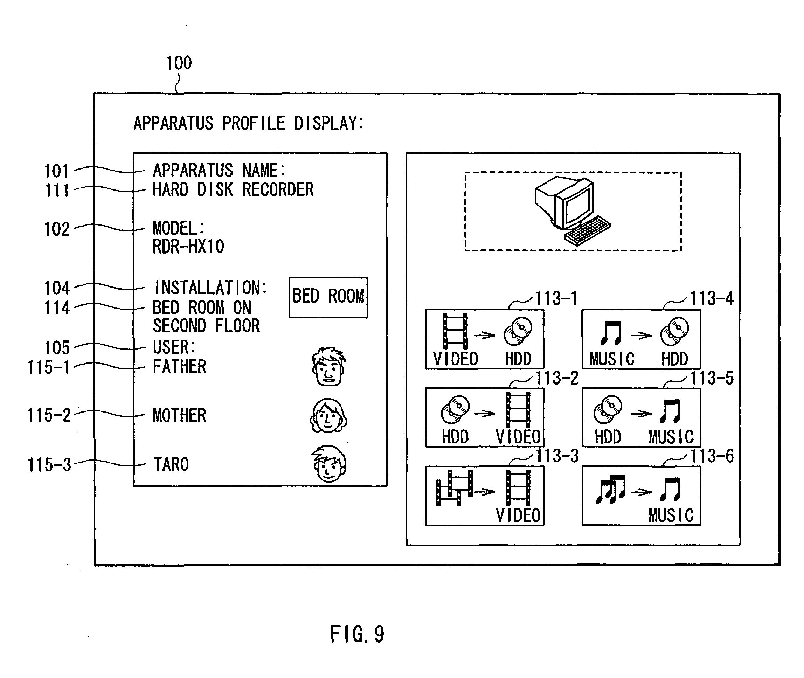

First, descriptions will be given of customization of image and sound information, apparatus information, and association information related to the information processing apparatus 1 connected to the network 9 with reference to Figs. 7, 8, and 9. Fig. 8 shows one specific example of a registration screen displayed on the screen in customization. Fig. 9 shows one specific example of a registration screen displayed on the screen after customization. When there is no program performing the customization in the information processing apparatus 1, which tries to actually display the registration screen, the program request command 30K is transmitted to a different information processing apparatus 1 having that program, and the program return command 30L is received from the information processing apparatus 1, and thereby that program is obtained. For example, it is possible that when the power is turned on, the information processing apparatus 1 checks presence of that program, and if that program does not exist, that program is obtained from a different apparatus.

First, the program performing the customization is started up (Step S 104). First, a user selects which information processing apparatus 1 connected to the network 9 is to be customized. Then, the screen as shown in Fig. 8 is displayed (Step S105). It is possible that, when the program for performing customization is started up, the program obtains apparatus information of respective information processing apparatuses 1. Otherwise, it is possible that, when the user selects the information processing apparatus 1 to be customized, the program obtains only the apparatus information of the selected information processing apparatus 1.

In the case that the information processing apparatus 1 that the user is actually operating is the master apparatus, when the apparatus information is related to a different apparatus (slave apparatus), the master apparatus can obtain the apparatus information from a given memory of the self apparatus (master apparatus), or can obtain the apparatus information from the different apparatus (slave apparatus). When the apparatus information is related to the self apparatus (master apparatus), the master apparatus can obtain the apparatus information from a given memory of the self apparatus (master apparatus), or can obtain the apparatus information by detecting a self status. Meanwhile, in the case that the information processing apparatus 1 that the user is actually operating is the slave apparatus, when the apparatus information is related to a different apparatus (at least one of different slave apparatuses and the master apparatus), the slave apparatus obtains the apparatus information from the master apparatus. When the apparatus information is related to the self apparatus (slave apparatus), the slave apparatus obtains the apparatus information by detecting a self status. A method for giving and receiving the apparatus information is as described above.

While only the apparatus information is obtained in the foregoing description, in the case that the information processing apparatus 1 whose apparatus information is already customized is connected to the network 9, it is possible that not only the apparatus information but also image and sound information and association information related to customization can be obtained together. A method for obtaining the image and sound information and the association information related to customization, and a method for displaying such information on the screen will be described later in detail.

After the apparatus information is displayed on the screen as shown in Fig. 8, the user inputs text or image and sound information for identifying the information processing apparatus 1, the installation place 104, the user 105, the function 103 and the like by using a keyboard, a mouse, a remote controller, an external storage medium, an option input device (USB, CCD, other external connection apparatus or the like), or a standard input device (a camera, a microphone, a touch panel or the like) (Step S106). The user can input the text or the image and sound information by selecting the text or the image and sound information from those previously built in the information processing apparatus as an apparatus profile.

The user substitutes each apparatus information on the screen, which is exemplified in Fig. 8 to the image and sound information input by the user. By this operation, association information, which associates the apparatus information with the image and sound information input by the user is produced (Step S107). Such association information is used for substituting the apparatus information to an image or sound data easily recognized by the user in screen display. By executing the foregoing procedure, customization is ended.

The above is all the descriptions of the operations for customization. Next, descriptions will be given of operations until network registration is completed. Such operations will be sequentially described in order that (A) network registration of image and sound information, apparatus information, and association information related to customization (hereinafter referred to as customization data), and (B) giving and receiving the customization data between the master apparatus and a slave apparatus.

### (Network registration of customization data)

Next, descriptions will be given of network registration of customization data. When customization is ended, a user inputs a customization end trigger to the information processing apparatus 1 by, for example, selecting an end button (Step S108). The information processing apparatus 1 (self apparatus) receiving this trigger records the customization data in a self given memory (Step S109). Further, when a self apparatus is a slave apparatus, the slave apparatus transmits the customization data to the master apparatus (step S110). When the master apparatus receives the customization data, the master apparatus records the customization data in a given area of the main memory 26 (Step S111). Then, the master apparatus transmits a notification that registration of the apparatus information is completed to the slave apparatus of the sender (Step S 112). The slave apparatus receiving that notification displays that network registration is completed, and ends the program for performing customization (Step S113). Meanwhile, when a self apparatus is the master apparatus, the master apparatus records the customization data in a given area of the self main memory 26. Then, the master apparatus displays that registration of the apparatus information is completed, and ends the program for performing customization.

### (Giving and receiving customization data between the master apparatus and a slave apparatus)

As above, the customization data related to the master apparatus and a slave apparatus is registered on the network. Meanwhile, during the course, before, and after customization, as described above, the MS manager 70-1 of the master apparatus and a slave apparatus always checks a situation of the network 9. Further, any of the master apparatus and a slave apparatus, the MS manager 70-1 notifies the following information to the main processor 21: (a) if a notification that customization data of at least one of a self apparatus and a different apparatus is changed is received from the self apparatus (for example, when apparatus information of at least one of a self apparatus and a different apparatus is customized in the self apparatus); (b) if enquiry on customization data of at least one of a self apparatus and a different apparatus is received from the self apparatus (for example, when apparatus information of at least one of a self apparatus and a different apparatus is tried to be customized in the self apparatus); (c) if the second status request command 30H is received from a different apparatus (for example, when apparatus information of a self apparatus is tried to be customized in a different apparatus); or (d) if the fourth status return command 30J is received from a different apparatus (for example, when apparatus information of at least one of a self apparatus and a different apparatus is customized in the different apparatus). When the main processor 21 receives the foregoing notification from the MS manager 70-1, the main processor 21 executes the capacity exchange program 70-2. The respective cases will be hereinafter described in detail.

In the case that a self apparatus is the master apparatus, (a) if a notification that customization data of the self apparatus is changed is received from the self apparatus, the capacity exchange program 70-2 transmits the self customization data to the different slave apparatuses connected to the network 9.

Here, when a plurality of "different slave apparatuses" exist, different slave apparatus does not necessarily mean all of the different slave apparatuses, but may mean some of them. Transmitting the self customization data can be performed by transmitting the software cell 30, in which the DMA command 30E is the fourth status return command 30J and the self customization data is included as data to different slave apparatus.

In the case that a self apparatus is the master apparatus, (b) if a reference request of customization data of at least one of the self apparatus (master apparatus) and a different apparatus (slave apparatus) is received from the self apparatus, the capacity exchange program 70-2 obtains the customization data of the information processing apparatus 1 of the reference destination.

Here, if the reference destination is a different apparatus (slave apparatus), the master apparatus can obtain the customization data of the different apparatus from a given memory of the self apparatus (master apparatus), or can obtain the customization data from the different apparatus (slave apparatus) of the reference destination. Meanwhile, if the reference destination is a self apparatus (master apparatus), the master apparatus obtains the customization data of the self apparatus from a given memory of the self apparatus (master apparatus). If the reference destination is a different apparatus (slave apparatus), obtaining the customization data from the different apparatus (slave apparatus), the reference destination by the master apparatus can be performed by producing the software cell 30, in which the DMA command 30E is the second status request command 30H in the capacity exchange program 70-2 of the master apparatus and transmitting the software cell 30 to the slave apparatus of the reference destination; and then receiving the software cell 30, in which the DMA command 30E is the second status return command 30J, and the customization data of the slave apparatus of the reference destination is included as data from the slave apparatus of the reference destination.

In the case that a self apparatus is the master apparatus, (c) if a notification that the second status request command 30H is received from a different apparatus (slave apparatus) is received, the capacity exchange program 70-2 transmits customization data of the information processing apparatus 1 indicated by the reference destination ID 30D to the information processing apparatus 1 indicated by the response destination ID 30C.

Here, when the reference destination is a different apparatus (slave apparatus), the master apparatus can obtain the customization data of the different apparatus from a given memory of the self apparatus (master apparatus), or can obtain the customization data from the different apparatus (slave apparatus) of the reference destination. Meanwhile, when the reference destination is the self apparatus (master apparatus), the master apparatus obtains the customization data from a given memory of the self apparatus (master apparatus). The information processing apparatus 1 (slave apparatus), the response destination is not limited to all of the different slave apparatuses, but can be some of them. When the reference destination is a slave apparatus, obtaining the customization data of the slave apparatus from the slave apparatus by the master apparatus can be performed by a method similar to the foregoing.

In the case that a self apparatus is the master apparatus, (d) if a notification that the fourth status return command 30J is received from a different apparatus (slave apparatus) is received, the capacity exchange program 70-2 obtains customization data of the slave apparatus indicated by the information processing apparatus ID in a data area of the received software cell 30, and transmits such customization data to a different apparatus.

Here, the different apparatus (slave apparatus), the transmission destination is not limited to all of the different slave apparatuses, but can be some of them. Further, the different apparatus (slave apparatus) of the transmission destination can include the different apparatus (slave apparatus) of the sender. Transmitting the foregoing customization data from the master apparatus to a different apparatus (slave apparatus) can be performed by transmitting the software cell 30, in which the DMA command 30E is the third status return command 30J and the previously received customization data is included as data to the different apparatus (slave apparatus).

Meanwhile, in the case that a self apparatus is a slave apparatus, (a) if a notification that customization data of the self apparatus is changed is received from the self apparatus, the capacity exchange program 70-2 transmits the self customization data to the master apparatus connected to the network 9. Transmitting the self customization data can be performed by transmitting the software cell 30, in which the DMA command 30E is the fourth status return command 30J and the customization data of the self apparatus (slave apparatus) is included as data to the master apparatus.

In the case that a self apparatus is a slave apparatus, (b) if a reference request of customization data of at least one of the self apparatus and a different apparatus is received from the self apparatus, the capacity exchange program 70-2 obtains the customization data of the information processing apparatus 1 of the reference destination.

Here, when the reference destination is a difference apparatus (at least one of the different slave apparatuses and the master apparatus), the self apparatus (slave apparatus) obtains the customization data of the different apparatus from the master apparatus. Meanwhile, when the reference destination is the self apparatus (slave apparatus), the self apparatus (slave apparatus) can obtain the customization data of the self apparatus from a given memory of the self apparatus (slave apparatus), or can obtain the customization data from a self given memory. When the reference destination is a different apparatus (at least one of the different slave apparatuses and the master apparatus), obtaining the customization data from the master apparatus by the self apparatus (slave apparatus) can be performed by producing the software cell 30, in which the DMA command 30E is the second status request command 30H in the capacity exchange program 70-2 of the self apparatus (slave apparatus) and transmitting the software cell 30 to the master apparatus; and then receiving the software cell 30 in which the DMA command 30E is the second status return command 30J, and the customization data of the different apparatus of the reference destination (at least one of the different slave apparatuses and the master apparatus) is included as data from the master apparatus.

In the case that a self apparatus is a slave apparatus, (c) if a notification that the second status request command 30H is received from a different apparatus (master apparatus) is received, the capacity exchange program 70-2 obtains customization data of the self apparatus (slave apparatus), and transmits such customization data to the information processing apparatus 1 indicated by the response destination ID 30C (master apparatus). Obtaining the self customization data by the self apparatus (slave apparatus) can be performed by obtaining the customization data from a self given memory.

In the case that a self apparatus is a slave apparatus, (d) if a notification that the fourth status return command 30J is received from a different apparatus is received, the capacity exchange program 70-2 obtains customization data of the information processing apparatus 1 indicated by the information processing apparatus ID in a data area of the received software cell 30, and records such customization data in a self given memory. Here, the different apparatus is the master apparatus or the different slave apparatus. Further, the information processing apparatus 1 indicated by the information processing apparatus ID is at least one of the master apparatus and different slave apparatus. The information processing apparatus 1 indicated by the information processing apparatus ID can include the self apparatus.

Any of the master apparatus and a slave apparatus, the capacity exchange program 70-2 secures an area for storing the customization data of all the information processing apparatuses 1 including the self apparatus connected to the network 9 in the main memory 26 of the self apparatus, and records such information as an apparatus information table.

Further, any of the master apparatus and a slave apparatus, when customization data is received from a different apparatus as described above, the capacity exchange program 70-2 records the customization data in the self main memory. Similarly, when a notification that customization data of a self apparatus is changed is received as described above, the capacity exchange program 70-2 records the customization data in a given area of the self main memory.

Further, any of the master apparatus and a slave apparatus, the capacity exchange program 70-2 records image and sound information and association information related to customization of the self apparatus in the external recording section 28-1 and the like, in which no record is erased even if no power of the hard disk or the like of the self apparatus is supplied. Thereby, the self apparatus has recorded the image and sound information and the association information related to self customization. Therefore, it is not necessary to redo customization.

The above is all descriptions on the operations until network registration is completed. Finally, descriptions will be given of operations until such network-registered data is displayed on the screen. Descriptions will be sequentially given in order that (a) display of the network-registered data on the screen; and (b) display change in the aspect according to the specification of the display screen.

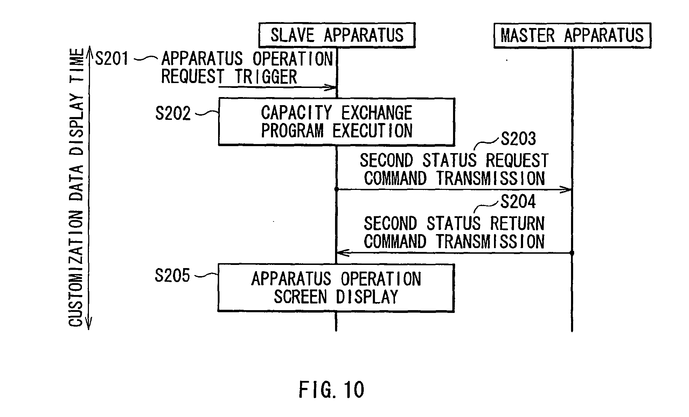

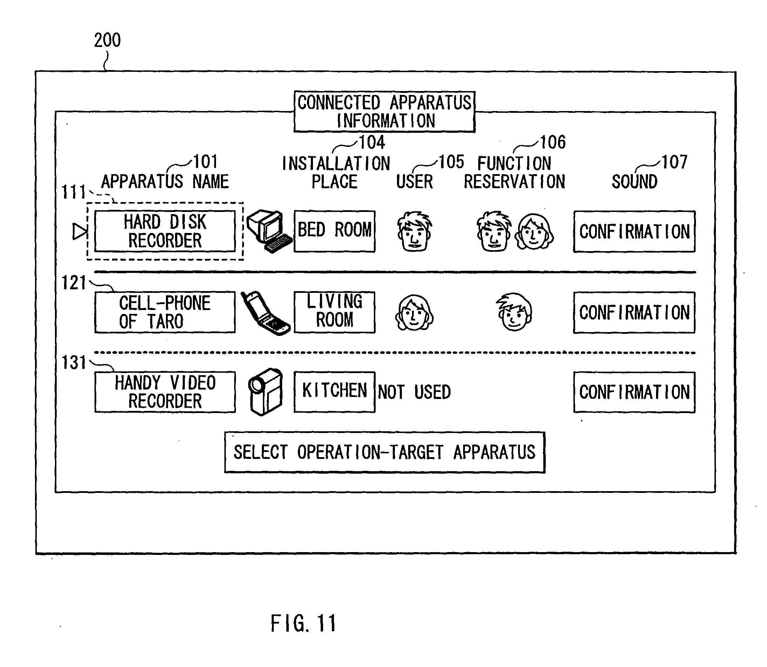

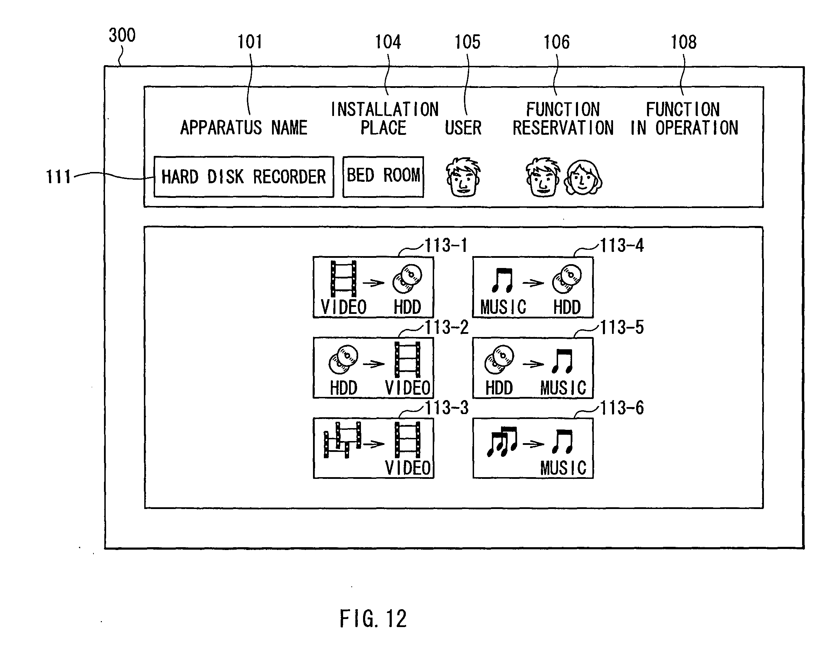

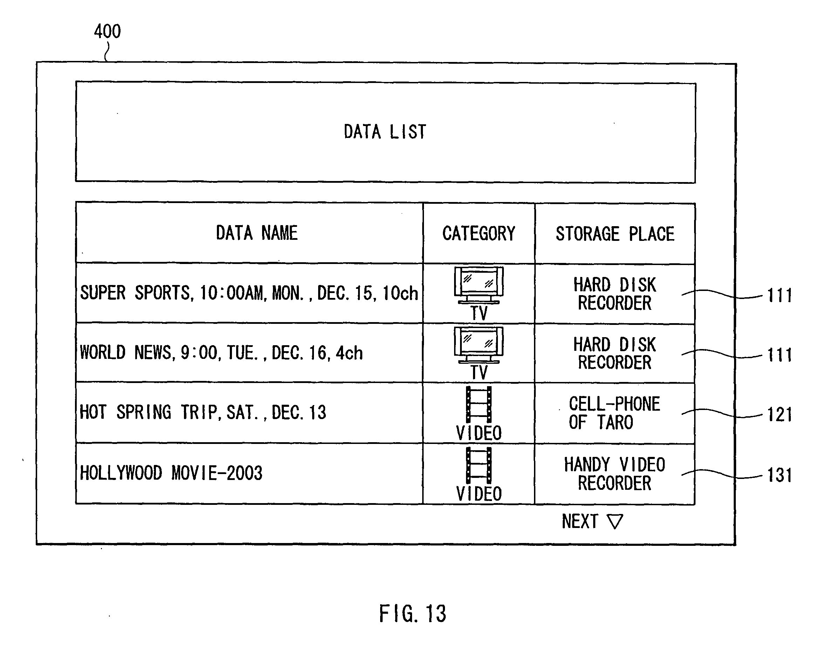

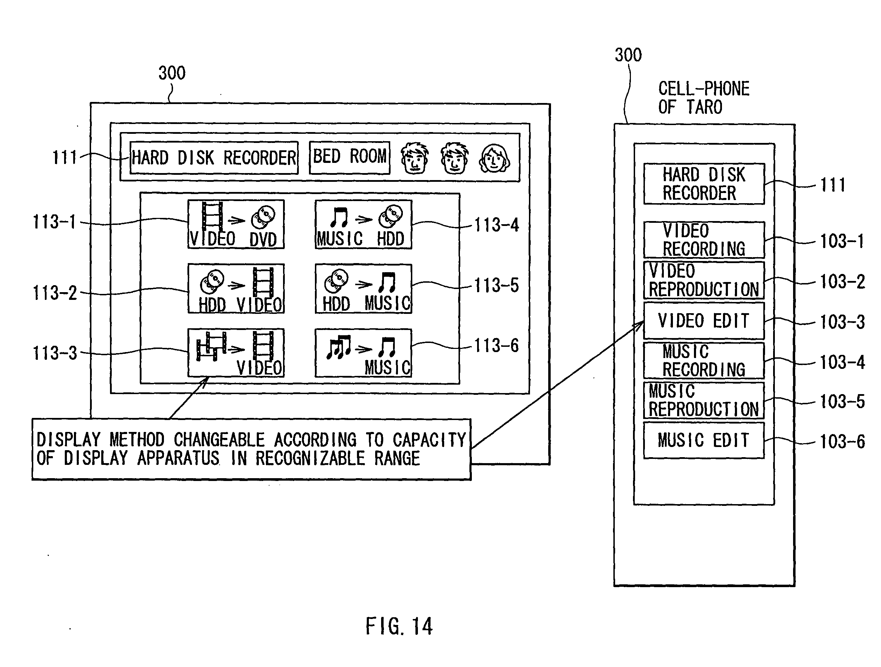

Fig. 10 shows an outline of the operations in displaying the network-registered customization data on the screen. Fig. 11 shows one specific example of a screen for operating the information processing apparatus 1. In the screen, a list of the information processing apparatuses 1 connected to the network 9 is shown. Fig. 12 shows one specific example of a screen for operating the information processing apparatus 1 and a list of functions that the information processing apparatus 1 selected by the user on the operation screen in Fig. 11 has. Fig. 13 shows one specific example of a screen for operating the information processing apparatus 1 and a list of data stored by executing a certain function of Fig. 12. Fig. 14 shows one specific example of a screen for operating the information processing apparatus 1 and a condition of displaying contents of apparatus information in the aspect according to a specification of a display screen (a size, a shape, a resolution or the like of the display screen). Descriptions will be hereinafter given of the respective operations with reference to Fig. 10.

### (Display of network-registered data on the screen)

First, a user starts up a program for displaying a screen for operating the information processing apparatus 1 connected to the network 9 (Step S201). When the information processing apparatus 1 for displaying the screen has no program enabling displaying customization data, the program is obtained by transmitting the program request command 30K to the different information processing apparatus 1 having that program and receiving the program return command 30L from the information processing apparatus 1. For example, when presence of the program is checked by the information processing apparatus 1 when the power is turned on and no program is found, the program can be obtained from a different apparatus.

Any of the master apparatus and a slave apparatus, if the program for displaying a screen for operating the information processing apparatus 1 connected to the network 9 is started up, the MS manager 70-1 notifies such fact to the main processor 21-1. If the main processor 21-1 receives the foregoing notification from the MS manager 70-1, the main processor 21-1 executes the capacity exchange program 70-2 (Step S202). The capacity exchange program 70-2 obtains apparatus information, image and sound information, and association information of each information processing apparatus 1.

If the apparatus displaying the screen is the master apparatus, the master apparatus obtains customization data of the self apparatus and each slave apparatus from a given memory of the self apparatus. Obtaining the customization data from the master apparatus can be performed by producing the software cell 30, in which the DMA command 30E is the second status request command 30H, transmitting the software cell 30 to the master apparatus (Step S203), and then receiving the software cell 30, in which the DMA command 30E is the second status return command 30J and the customization data of each information processing apparatus 1 is included from the master apparatus (Step S204). Meanwhile, if the apparatus displaying the screen is a slave apparatus, the slave apparatus obtains customization data of the master apparatus and all of the different slave apparatuses from the master apparatus. In the foregoing, if the apparatus displaying the screen is a slave apparatus, the slave apparatus receives the software cell 30 including the customization data of the master apparatus and all of the different slave apparatuses from the master apparatus. However, the slave apparatus can obtain customization data of all of the slave apparatuses including the self apparatus and the master apparatus from the master apparatus.

After the customization data of each information processing apparatus 1 is obtained as above, the master apparatus and the slave apparatus display the customization data on the screen, for example, as shown in Figs. 11, 12, and 13 (Step S205). Even if customization data of a certain information processing apparatus 1 is changed while the customization data of each information processing apparatus 1 is displayed on the screen as above, the capacity exchange program 70-2 is executed as described above. Therefore, the information processing apparatus 1 displaying the screen shares the latest information, and updates the display to the latest information.

### (Change of display in the aspect according to the specification of a display screen)

Further, as shown in Fig. 14, it is possible that contents of apparatus information are displayed in the aspect according to the specification of a display screen (a size, a resolution or the like of the display screen). For example, if the display screen is small, or if there is lots of apparatus information, it is possible that simplified or miniaturized symbols or icons are displayed, compared to a large symbol or a large icon used for a large display screen. As such simplified or miniaturized symbol or icon, an image or a sound selected by a user can be used.

As above, according to the information processing apparatus 1 of an embodiment of the invention, by using image and sound information, apparatus information, and association information received from the different information processing apparatuses, contents of apparatus information of each information processing apparatus are displayed by an image or a sound. Therefore, for example, on the assumption that a different information processing apparatus is operated from an operation screen of a certain information processing apparatus, users can easily designate an operation target, and can intuitively perform operations.

In particular, if configuration is made so that the information processing apparatus 1 further includes: an input section inputting image and sound information; and an association section producing association information for associating apparatus information with the image and sound information input by the input section, and the association information produced by the association section is stored and transmitted to a different information processing apparatus together with the image and sound information input by the input section and the apparatus information, it becomes available to display the apparatus information in a manner using the image and the sound desired by users, that is, in the customized manner, and a more useful system can be built.

Further, if configuration is made to detect what program exists in a self apparatus, for example, the foregoing program for performing customization, or a program enabling display of customization data can be obtained from different information processing apparatuses 1. Further, if configuration is made so that contents of apparatus information are displayed in a manner which meet a specification of the display screen (a size, a resolution or the like of the display screen), users can more simply designate an operation target, and can more intuitively perform operations. Further, in the case that a plurality of information processing apparatuses 1 connected to the network 9 includes one or more slave apparatuses and the master apparatus for managing the slave apparatuses, if configuration is made so that a certain information processing apparatus 1 functions as a slave apparatus, the slave apparatus can share image and sound information, apparatus information, and association information of each information processing apparatus 1 only by communicating with the master apparatus. Further, if configuration is made so that each information processing apparatus 1 communicates with different information processing apparatuses 1 by using the software cell 30, each information processing apparatus 1 can easily share not only apparatus information on hardwares, softwares, and utilization environments of the different information processing apparatus 1, but also image and sound information and association information of the different information processing apparatus 1.

According to the master apparatus of an embodiment of the invention, the master apparatus transmits image and sound information, apparatus information, and association information received from one slave apparatus to the different slave apparatus. Therefore, such information can be shared by each slave apparatus. In the result, configuration can be made so that in each slave apparatus, contents of apparatus information of each slave apparatus are displayed with an image or a sound by using the shared information. In this case, for example, on the assumption that a different information processing apparatus is operated from an operation screen of a certain information processing apparatus, users can simply designate an operation target, and can intuitively perform operations.

According to the network system of an embodiment of the invention, image and sound information, apparatus information, and association information received from one slave apparatus by the master apparatus is transmitted to the different slave apparatus. Therefore, each slave apparatus can share such information. A slave apparatus displays contents of apparatus information with an image or a sound by using the image and sound information, the apparatus information, and the association information received from the master apparatus. Therefore, for example, on the assumption that a different slave apparatus is operated from an operation screen of a certain slave apparatus, users can simply designate an operation target, and can intuitively perform operations.

Further, configuration is made so that if the main power of the master apparatus connected to the network 9 is turned off, or if the master apparatus is disconnected from the network 9, one slave apparatus immediately functions as a master apparatus. Therefore, the slave apparatus becoming the master apparatus and a different slave apparatus can share image and sound information, apparatus information, and association information of the slave apparatus becoming the master apparatus and a different slave apparatus.

According to the apparatus information display method of an embodiment of the invention, image and sound information is input, association information for associating such input image and sound information with apparatus information is produced, such image and sound information, apparatus information, and association information is shared by each information processing apparatus, and contents of apparatus information of each information processing apparatus are displayed by using at least one of an image and a sound based on the association information in each information processing apparatus. Therefore, for example, on the assumption that a different information processing apparatus is operated from an operation screen of a certain information processing apparatus, users can simply designate an operation target, and can intuitively perform operations.

It should be understood by those skilled in the art that various modifications, combinations, sub-combinations and alterations may occur depending on design requirements and other factors insofar as they are within the scope of the appended claims or the equivalents thereof.

Various respective aspects and features of the invention are defined in the appended claims. Features from the dependent claims may be combined with features of the independent claims as appropriate and not merely as explicitly set out in the claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An information processing apparatus in a network system including a plurality of information processing apparatuses, comprising:
a communication means for communicating with one or more different information processing apparatuses, and receiving image and sound information including at least one of an image and a sound, apparatus information of different information processing apparatuses, and association information for associating the image and sound information with the apparatus information;
a storage means for storing the image and sound information, the apparatus information, and the association information received by the communication means; and
a display means for displaying contents of apparatus information of each information processing apparatus by using at least one of an image and a sound based on the information stored in the storage means.

2. An information processing apparatus according to claim 1, further comprising:
an input section inputting image and sound information including at least one of an image and a sound; and
an association section producing association information for associating apparatus information of each information processing apparatus with the image and sound information input by the input section, wherein
the storage section stores the association information produced by the association section together with the image and sound information input by the input section and the apparatus information, and wherein
the communication section transmits the association information produced by the association section together with the image and sound information input by the input section and the apparatus information to different information processing apparatuses.

3. An information processing apparatus according to claim 1, wherein the communication section has a function to obtain a program for realizing a function to produce and utilize the association information from a different information processing apparatus.

4. An information processing apparatus according to claim 1, wherein the display section has a display screen, and displays contents of apparatus information in a manner which meet a specification of the display screen.

5. An information processing apparatus according to claim 1, wherein the apparatus information includes at least one of a type, a model, a function, an installation place, a user, and a utilization situation of an information processing apparatus.

6. An information processing apparatus according to claim 2, wherein if the plurality of information processing apparatuses includes one or more slave apparatuses and a master apparatus for managing the slave apparatuses, functions as the slave apparatus.

7. An information processing apparatus according to claim 6, wherein the communication section transmits the image and sound information, the apparatus information, and the association information to the master apparatus by using a software cell having a given format, and receives apparatus information, image and sound information, and association information that the master apparatus obtains from different slave apparatuses from the master apparatus by using the software cell.

8. A master apparatus in a network system including one or more slave apparatuses and a master apparatus for managing the slave apparatuses, comprising:
a reception means for receiving image and sound information including at least one of an image and a sound, apparatus information of each slave apparatus, and association information for associating the image and sound information with the apparatus information from one slave apparatus; and
a transmission means for transmitting the image and sound information, the apparatus information, and the association information received by the reception means to different slave apparatuses.

9. A network system including one or more slave apparatuses and a master apparatus for managing the one or more slave apparatuses, wherein
the master apparatus comprises:
a reception means for receiving image and sound information including at least one of an image and a sound, apparatus information of each slave apparatus, and association information for associating the image and sound information with the apparatus information from the slave apparatus; and
a transmission means for transmitting the image and sound information, the apparatus information, and the association information received by the reception means to different slave apparatuses, and
wherein
the slave apparatus includes:
a communication means for receiving the image and sound information, the apparatus information, and the association information from the master apparatus;
a storage means for storing the image and sound information, the apparatus information, and the association information received by the communication means; and
a display means for displaying contents of apparatus information of each information processing apparatus by using at least one of an image and a sound based on the information stored in the storage means.

10. A network system according to claim 9, wherein any of slave apparatuses can become a new master apparatus instead of the master apparatus.

11. An apparatus information display method applied to a network system including a plurality of information processing apparatuses, wherein
in any of information processing apparatuses, image and sound information including at least one of an image and a sound is input, and association information for associating the input image and sound information with apparatus information of each information processing apparatus is produced, wherein
the image and sound information, the apparatus information, and the association information is shared by each information processing apparatus, and wherein
in each information processing apparatus, contents of apparatus information of each information processing apparatus are displayed by using at least one of an image and a sound based on the association information.

12. An apparatus information display method according to claim 11, wherein the network system is configured so that the plurality of information processing apparatuses includes one or more slave apparatuses and a master apparatus for managing the slave apparatuses, wherein
in the slave apparatus, image and sound information is input, and association information for associating the input image and sound information with apparatus information of each slave apparatus is produced, and the produced association information is transmitted to the master apparatus together with the image and sound information and the apparatus information, wherein
in the master apparatus, the image and sound information, the apparatus information, and the association information is received from the slave apparatus, and transmitted to different slave apparatuses, and thereby such information is shared by each slave apparatus, and wherein
in each slave apparatus, contents of apparatus information of each slave apparatus are displayed by using at least one of an image and a sound based on the association information.

13. An information processing apparatus in a network system including a plurality of information processing apparatuses, comprising:
a communication section communicating with one or more different information processing apparatuses, and receiving image and sound information including at least one of an image and a sound, apparatus information of different information processing apparatuses, and association information for associating the image and sound information with the apparatus information;
a storage section storing the image and sound information, the apparatus information, and the association information received by the communication section; and
a display section displaying contents of apparatus information of each information processing apparatus by using at least one of an image and a sound based on the information stored in the storage section.

14. A master apparatus in a network system including one or more slave apparatuses and a master apparatus for managing the slave apparatuses, comprising:
a reception section receiving image and sound information including at least one of an image and a sound, apparatus information of each slave apparatus, and association information for associating the image and sound information with the apparatus information from one slave apparatus; and
a transmission section transmitting the image and sound information, the apparatus information, and the association information received by the reception section to different slave apparatuses.

15. A network system including one or more slave apparatuses and a master apparatus for managing the one or more slave apparatuses, wherein
the master apparatus comprises:
a reception section receiving image and sound information including at least one of an image and a sound, apparatus information of each slave apparatus, and association information for associating the image and sound information with the apparatus information from the slave apparatus; and
a transmission section transmitting the image and sound information, the apparatus information, and the association information received by the reception section to different slave apparatuses, and wherein
the slave apparatus includes:
a communication section receiving the image and sound information, the apparatus information, and the association information from the master apparatus;
a storage section storing the image and sound information, the apparatus information, and the association information received by the communication section; and
a display section displaying contents of apparatus information of each information processing apparatus by using at least one of an image and a sound based on the information stored in the storage section.
